# EUROPÄISCHE PATENTSCHRIFT

(11) **EP 2 890 923 B1**
(45) Veröffentlichungstag und Bekanntmachung des Hinweises auf die Patenterteilung: **31.08.2016**
(21) Anmeldenummer: 13779761.9
(22) Anmeldetag: 08.10.2013
(51) Int. Cl.: F16L 59/18, F16L 19/025

(54) **ROHRVERBINDUNG ZUR DURCHLEITUNG EINES UNTER DRUCK STEHENDEN FLUIDS**
PIPE CONNECTION FOR CONDUCTING A FLUID THAT IS UNDER PRESSURE
ASSEMBLAGE DE TUBES DESTINÉ À FAIRE PASSER UN FLUIDE SOUS PRESSION

(30) Priorität: 15.10.2012 DE 102012218727
(43) Veröffentlichungstag der Anmeldung: 08.07.2015
(73) Patentinhaber: Siemens Aktiengesellschaft, 80333 München (DE)
(72) Erfinder: BÖTTCHER, Andreas, 40822 Mettmann (DE); DÜMLER, Hartwig, 50996 Köln (DE); HESSE, Werner, 45721 Haltern am See (DE); KOCK, Boris, Ferdinand, 40878 Ratingen (DE); LAPP, Patrick, 10367 Berlin (DE); STARING, Sascha, 47169 Duisburg (DE); WEBER, Gerd, 46537 Dinslaken (DE); OTTE, Lars, 23858 Reinfeld (Holstein) (DE); SEIDEL, Falk, 46499 Hamminkeln (DE); STAPPER, Philipp, 45131 Essen (DE)
(86) Internationale Anmeldenummer: PCT/EP2013/070887
(87) Internationale Veröffentlichungsnummer: WO 2014/060240

(56) Entgegenhaltungen:
- WO-A1-03/021143
- DE-U1-202011 104 255

## Beschreibung

Die Erfindung betrifft eine Rohrverbindung zur Durchleitung eines unter Druck stehenden Fluids, umfassend zwei rohrförmige Anschlussstücke, die nach Art einer Kegelklemmverbindung ineinandersteckend von einer Überwurfmutter miteinander verschraubt sind, wobei jedes Anschlussstück eine konische Dichtfläche aufweist, welche dichtend an der anderen der beiden Dichtflächen anliegt.

Eingangs genannte Rohrverbindungen sind aus dem Stand der Technik bestens bekannt. Beispielsweise offenbart die DE 1 960 933 U ein Anschlussstück als Teil einer derartigen Rohrverbindung, welches an einem Rohrende angeschweißt werden kann. Das bekannte Anschlussstück wird dabei in ein zumindest teilweise komplementäres Anschlussstück eingesteckt, wobei die beiden Anschlussstücke mit einer Überwurfmutter miteinander verschraubt werden. Dabei werden die konischen Dichtflächen aneinander gepresst, wodurch eine dichte Rohrverbindung entsteht. Die Rohrverbindung wird zumeist zur Durchleitung von Hydrauliköl eingesetzt. Es hat sich jedoch gezeigt, dass derartige Verbindungen bei der Durchleitung eines Fluids mit variierender Temperatur undicht werden können.

Eine weitere Lösung aus dem Stand der Technik ist durch die DE 4104711 A1 offenbart, in welcher eine Kupplung für vakuumisolierte Rohrleitungen beschrieben wird. Hierbei ist ein konisches Anschlussstück fest mit einem Leitungsendrohr verbunden. Das Leitungsendrohr weist ein Standvakuum auf. Ein weiteres, gegenpassiges Anschlussstück der Kupplung ist mit Hilfe einer Überwurfmutter mit dem konischen Anschlussstück verbunden. Nachteilig ist hierbei jedoch, dass eine feste Verbindung von konischem Anschlussstück und Leitungsendrohr bei stark variierenden Temperaturen zu Materialspannungen und Beschädigungen dieser Bauteile führen kann, was wiederum zu unerwünschten Undichtigkeiten führen kann. Bei materialtechnischer Trennung von konischem Anschlussstück und Leitungsrohr steht jedoch eine nicht ausreichende Fixierung des Leitungsrohres in Bezug auf das konische Anschlussstück zu befürchten, so dass eine nur unzureichende thermische Isolierung die Folge ist.

DE 20 2011 104255 U1 offenbart eine Rohrverbindung, die alle Merkmale des Oberbegriffs des Anspruchs 1 umfasst.

Aufgabe der Erfindung ist es daher, diese aus dem Stand der Technik bekannten Nachteile zu vermeiden, und die Bereitstellung einer Rohrverbindung zur Durchleitung eines unter Druck stehenden Fluids, welche trotz der Durchleitung eines Fluids mit wechselnder Temperatur dauerhaft zuverlässig dicht sein soll, vorzuschlagen.

Die der Erfindung zugrunde liegende Aufgabe wird mit einer Rohrverbindung gelöst, welche den Merkmalen des Anspruchs 1 entspricht. Vorteilhafte Weiterbildungen der Rohrverbindungen sind in den abhängigen Ansprüchen angegeben, deren Merkmale in beliebiger Weise miteinander kombiniert werden können.

Erfindungsgemäß ist vorgesehen, dass das innen sitzende Anschlussstück zumindest im axialen Abschnitt seiner Dichtfläche rohrinnenseitig - also im Rohrinneren - eine Wärmedämmung aufweist, welche als Wärmedämmrohr ausgebildet ist.

Der Erfindung liegt die Erkenntnis zugrunde, dass bei variierender Temperatur des Fluids das innen sitzende Anschlussstück thermisch schneller reagiert als das äußere der beiden Anschlussstücke. Dies kann dazu führen, dass bei absinkenden Temperaturgradienten der Kegel der inneren Dichtfläche schneller schrumpft als der Kegel der äußeren Dichtfläche. Dies kann einerseits zu Undichtigkeiten führen und andererseits das Losbrechmoment der Überwurfmutter verringern. Erfindungsgemäß soll die thermische Reaktion des inneren Kegels an den äußeren Kegel angeglichen werden. Aus diesem Grund ist im axialen Abschnitt der Dichtfläche des inneren Kegels an der Innenrohrfläche eine Wärmedämmung vorgesehen. Hierdurch wird der Wärmeeintrag bzw. die Wärmeausleitung vom Fluid in das Kegelmaterial bzw. aus dem Kegelmaterial in das Fluid verzögert, verglichen mit der Lösung aus dem Stand der Technik. Damit kann die Rohrverbindung auch für thermisch transiente Anwendungen genutzt werden, ohne dass die Gefahr einer Undichtigkeit an der Rohrverbindung entsteht.

Die Wärmedämmung ist als ein Wärmedämmrohr ausgebildet. Das Wärmedämmrohr weist an seiner äußeren Fläche einen Nocken- oder ggf. einen endlos umlaufenden Bund auf, welcher in eine Ausnehmung eingreift, die axial von den beiden Anschlussstücken begrenzt ist. Damit besteht die Möglichkeit, das Wärmedämmrohr gegen eine Axialverschiebung längs der Anschlussstücke zu verhindern, so dass die vorgegebene Position des Wärmedämmrohres unveränderbar ist. Besonders bevorzugt ist dabei eine Ausgestaltung, bei der das Wärmedämmrohr radial gesehen zur Innenfläche des innen sitzenden Anschlussstücks geringfügig beabstandet ist. Dies verhindert die direkte Wärmeleitung über das Wärmedämmrohr in den Kegel der inneren Dichtfläche.

Vorzugsweise ist vorgesehen, dass das Graphit in einer Ringnut angeordnet ist, die an einer der beiden Dichtflächen vorgesehen ist. Beidseits der Ringnut liegen die beiden einander gegenüber liegenden konischen Dichtflächen der beiden Kegel aneinander, so dass man von einer Kammerung in Kombination mit einer Pressung des Graphits ausgehen kann, so dass trotz der Anwendung des Graphits bei höheren Temperaturen, beispielsweise 200°C oder 300°C, das Dichtmedium an dem gewünschten Ort verbleibt und nicht ausgetragen wird. Gleichzeitig besitzt Graphit den Vorteil, kleinere Beschädigungen in der Dichtfläche auszugleichen, die sonst zu einem Verlust der Dichtheit führen würde. Vorzugsweise ist die Ringnut vollständig mit Graphit gefüllt.

Mithin wird eine von der Temperatur des durchgeleiten Fluids entkoppelte Kegelklemmverbindung vorgeschlagen, die mit Hilfe eines zusätzlichen gekammerten Dichtelements - dem Graphit - abgedichtet ist.

Damit werden die bestehenden Kegelklemmverbindungen ertüchtigt, auch Fluide - gasförmig oder flüssig - im stationären wie transienten Zustand zu führen, wobei die Temperaturdifferenz zwischen Fluid und Umgebung einerseits sehr unterschiedlich sein und andererseits schwanken kann. Beispielsweise kann nun auch die Rohrverbindung bei sehr hohen Umgebungstemperaturen eingesetzt werden. Bei Rohrverbindungen von Brennstoffleitungen stationärer Gasturbinen können die Umgebungstemperaturen bis zu ∼420°C betragen und Fluidtemperaturen von ca. 20°C auftreten (oder auch 230°C bei Brennstoffvorwärmung). Daraus resultiert eine Temperaturdifferenz von 400K bzw. 190K im stationären Betrieb. Im transienten Fall, beispielsweise wenn die Rohrverbindung aufgeheizt ist und kein Fluid führt und dann die Fluidzuführung erfolgt, oder wenn die Umgebung und somit auch die Rohrverbindung sich bis auf eine stationäre Temperatur aufheizt und das vergleichsweise kalte Fluid in der Leitung strömt, kommt es zu einer unterschiedlichen zeitlich begrenzten Ausdehnung der Anschlussstücke, deren Dichtheit durch den thermisch entkoppelten Dichtsitz und der Graphitdichtung auch für die Aufheizzeit der Umgebung, welche erfahrungsgemäß etwa 200 Sekunden betragen kann, gewährleistet werden kann.

Gemäß einer weiteren Ausführungsform der Erfindung ist vorgesehen, dass wenigstens ein Ende des Wärmedämmrohrs als Schiebesitz ausgeführt ist, insbesondere beide Enden als Schiebesitze ausgeführt sind. Ein Schiebesitz ist hierbei insbesondere als Verformung des Wärmedämmrohrs ausgebildet, welcher bevorzugt weitgehend unabhängig von Temperatureinflüssen einen Kontakt zwischen Wärmedämmrohr und dem Anschlussstück gewährleisten kann, ohne dass es hierbei zu einem materialbedingten Schadensauftritt im Bereich des Kontakts kommt. Die im Bereich des Kontakts auftretenden Spannungen werden entsprechend durch das Material der Verformung aufgenommen, ohne jedoch hierbei einen Bruch zu erleiden. Die Verformung ist hierbei bevorzugt eine radiale, endständige Erweiterung des Wärmedämmrohrs, die insbesondere ebenfalls konisch ausgeführt sein kann. Im Bereich des Schiebesitzes sind keine weiteren Fixpunkte vorgesehen.

Weiter bevorzugt ist der zwischen der inneren Rohrfläche des innen sitzenden Anschlussstückes und dem Wärmedämmrohr angeordnete Hohlraum gegen das Einströmen von Fluid abgedichtet.

Gemäß einer weiteren vorteilhaften Ausgestaltung kann das Losbrechmoment der Überwurfmutter weiter gesteigert werden, wenn die Überwurfmutter mit Hilfe einer Kontermutter gegen Lösen gesichert ist. Dabei reicht es aus, dass die Kontermutter schmaler ausgebildet ist als eine konventionelle Schraubenmutter. Bei der Verwendung einer Kontermutter besteht sogar die Möglichkeit die Überwurfmutter auch axial kürzer auszubilden als gewöhnlich.

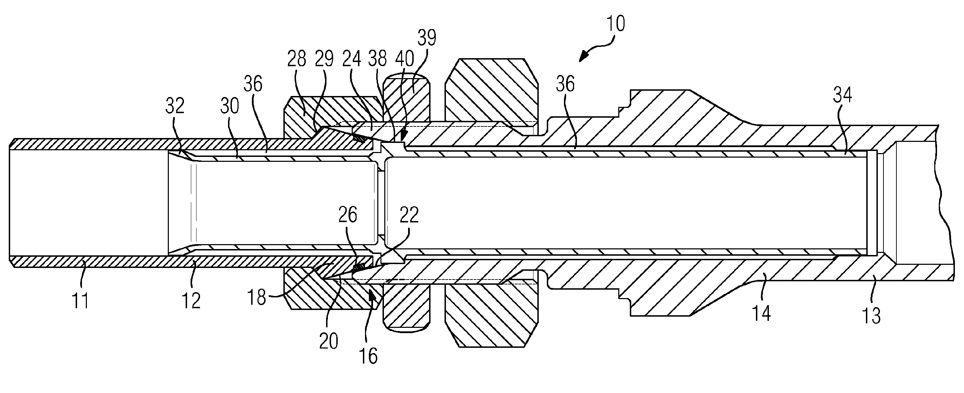

Weitere Vorteile und Merkmale der Erfindung werden anhand einer Figur näher erläutert. Es zeigt die einzige Figur den Längsschnitt durch eine Rohrverbindung zur Durchleitung eines unter Druck stehenden Fluids.

Die einzige Figur zeigt in einem Längsschnitt eine Rohrverbindung 10 zur Durchleitung eines unter Druck stehenden Fluids. Dabei umfasst die Rohrverbindung 10 zwei Anschlussstücke 12, 14, die für eine Kegelklemmverbindung 16 ausgestaltet sind. Das erste Anschlussstück 12 weist dazu einen Kegel 18 mit einer nach außen gerichteten konischen Dichtfläche 20 auf. In einer zur Dichtfläche 20 korrespondierenden Neigung weist das zweite Anschlussstück 14 eine ebenfalls konische Dichtfläche 22 auf, als Teil eines Kegels 24. Der Kegel 24 bildet den äußeren Kegel und der Kegel 18 den inneren Kegel der Kegelklemmverbindung.

In der Dichtfläche 20 ist eine endlos umlaufende Ringnut 26 zur Aufnahme von Graphit als Dichtmittel vorgesehen. Beide Anschlussstücke 12, 14 sind mit Hilfe einer Überwurfmutter 28 miteinander verbunden. Im Detail ist dazu die Überwurfmutter 28 auf das zweite Anschlussstück 14 aufgeschraubt, wobei die Überwurfmutter 28 einen konischen Wellenbund 29 als rückwärtigen Teil des Kegels 18 des ersten Anschlussstückes 12 in Richtung des zweiten Anschlussstückes 14 presst. Die beiden Anschlussstücke 12, 14 sind rohrförmig ausgebildet, so dass in deren Inneren das Fluid, beispielsweise ein Hydrauliköl oder auch ein gasförmiger oder flüssiger Brennstoff, von einem Rohrabschnitt 11 in einen zweiten Rohrabschnitt 13 geleitet werden kann.

Im Inneren der Rohrverbindung 10 ist ein Wärmedämmrohr 30 angeordnet. Das Wärmedämmrohr 30 ist zumindest in demjenigen axialen Abschnitt der Rohrverbindung 10 angeordnet, an dem das innen sitzende Anschlussstück - hier Anschlussstück 12 - mit seiner Dichtfläche 20 an der anderen Dichtfläche 22 anliegt. Gemäß dem Ausführungsbeispiel ist jedoch das Wärmedämmrohr in beide Richtungen axial verlängert, wobei die Enden 32, 34 des Wärmedämmrohres 30 nach Möglichkeit dicht an den Innenflächen der Rohrabschnitte 11, 13 anliegen, so dass ein Einströmen des Fluids in einen Zwischenraum 36 zwischen Wärmedämmrohr 30 und den Innenflächen der Rohrabschnitte 11 und 13 vermieden wird. Das dem Anschlussstück 12 zugeordnete Ende 32 des Wärmedämmrohres 30 ist hierbei als Schiebesitz ausgeführt. Zudem ist an der äußeren Mantelfläche des Wärmedämmrohres 30 ein Bund 38 vorgesehen, der axial zwischen den beiden Anschlussstücken 12, 14 fixiert ist. Die Überwurfmutter 28 ist mit Hilfe einer Kontermutter 39 gegen Lösen gesichert.

Insgesamt wird mit der Erfindung eine Rohrverbindung 10 zur Durchleitung eines unter Druck stehenden Fluids angegeben, umfassend zwei rohrförmige Anschlussstücke 12, 14 für eine Kegelklemmverbindung 16, die ineinandersteckend von einer Überwurfmutter 28 miteinander verschraubt sind, wobei jedes Anschlussstück 12, 14 eine konische Dichtfläche 20, 22 aufweist, welche dichtend an der anderen anliegt und wobei in einem der Dichtflächen 20, 22 eine Ringnut 26 vorgesehen ist. Um eine dichte Rohrverbindung 10 auch zur Durchleitung eines Fluids mit wechselnder bzw. variierender Temperatur bereitzustellen, wird vorgeschlagen, dass in der Ringnut 26 ein die Verbindung 10 zusätzlich abdichtendes Graphitband angeordnet ist, welches die Ringnut 26 vorzugsweise vollständig ausfüllt, und dass das innen sitzende der beiden Anschlussstücke 12 zumindest im axialen Abschnitt seiner Dichtfläche 20 rohrinnenseitig ein Wärmedämmrohr 30 aufweist.

## Patentansprüche

1. Rohrverbindung (10) zur Durchleitung eines unter Druck stehendes Fluids,
umfassend zwei rohrförmige Anschlussstücke (12, 14), die nach Art einer Kegelklemmverbindung (16) ineinandersteckend von einer Überwurfmutter (28) miteinander verschraubt sind,
wobei jedes Anschlussstück (12, 14) eine konische Dichtfläche (20, 22) aufweist, welche jeweils an der anderen der beiden Dichtflächen (22, 20) anliegt,
**dadurch gekennzeichnet, dass**
das innen sitzende Anschlussstück (12) zumindest im axialen Abschnitt seiner Dichtfläche (20) rohrinnenseitig ein Wärmedämmrohr (30)aufweist, wobei das Wärmedämmrohr (30) mantelseitig einen Nocken oder einen Bund (38) aufweist, welcher in eine Ausnehmung (40) eingreift, die axial von den beiden Anschlussstücken (12, 14) begrenzt ist.

2. Rohrverbindung (10) nach Anspruch 1,
bei der wenigstens ein Ende (32, 34) des Wärmedämmrohrs (30) als Schiebesitz ausgeführt ist, insbesondere beide Enden (32, 34) als Schiebesitze ausgeführt sind.

3. Rohrverbindung (10) nach einem der Ansprüche 1 oder 2, bei dem die Überwurfmutter gegen Lösen gesichert ist.

4. Rohrverbindung (10) nach Anspruch 3,
bei dem Überwurfmutter gekontert ist.

5. Rohrverbindung (10) nach einem der vorangehenden Ansprüche,
bei der in einer der beiden Dichtflächen (20) eine Ringnut (26) vorgesehen ist, in welcher eine Graphit aufweisende Dichtung angeordnet ist.

6. Verwendung einer Rohrverbindung (10) nach einem der vorangehenden Ansprüche zur Durchleitung eines Fluids mit variierender Temperatur oder dessen Temperatur zumindest kurzfristig von der Temperatur der Rohrverbindung um mehr als 100 K abweicht.

## Claims

1. Pipe connection (10) for conducting a fluid that is under pressure,
comprising two tubular connection pieces (12, 14) which are screwed together by means of a union nut (28), being plugged one into the other in the manner of a cone clamping connection (16),
wherein each connection piece (12, 14) has a conical sealing face (20, 22) which respectively bears against the other of the two sealing faces (20, 22), **characterized in that** the inner connection piece (12) has, at least in the axial section of its sealing face (20), a thermal barrier pipe (30) inside the pipe, wherein the thermal barrier pipe (30) has, on the lateral surface, a protuberance or a collar (38) which engages in a recess (40) which is delimited axially by the two connection pieces (12, 14).

2. Pipe connection (10) according to Claim 1,
in which at least one end (32, 34) of the thermal barrier pipe (30) is formed as a close sliding fit, in particular both ends (32, 34) are formed as close sliding fits.

3. Pipe connection (10) according to either of Claims 1 and 2, in which the union nut is prevented from coming loose.

4. Pipe connection (10) according to Claim 3,
in which the union nut is locked.

5. Pipe connection (10) according to one of the preceding claims,
in which an annular groove (26) is provided in one of the two sealing faces (20), in which there is arranged a graphite-containing seal.

6. Use of a pipe connection (10) according to one of the preceding claims for conducting a fluid with a varying temperature or whose temperature deviates, at least briefly, from the temperature of the pipe connection by more than 100 K.

## Revendications

1. Assemblage ( 10 ) de tuyaux pour faire passer un fluide sous pression,
comprenant deux pièces ( 12, 14 ) tubulaires de raccordement qui sont vissées l'une à l'autre par un écrou ( 28 ) d'accouplement en s'emmanchant l'une dans l'autre à la manière d'un serrage ( 16 ) par cône,
chaque pièce ( 12, 14 ) de raccordement ayant une surface ( 20, 22 ) d'étanchéité conique qui s'applique respectivement à l'autre des deux surfaces ( 22, 20 ) d'étanchéité, **caractérisé en ce que**
la pièce ( 12 ) de raccordement se trouvant à l'intérieur a, au moins dans la partie axiale de sa surface ( 20 ) d'étanchéité, du côté de l'intérieur du tuyau, un tuyau ( 30 ) de calorifugeage ayant, du côté de l'enveloppe, un bossage ou un collet ( 38 ) qui pénètre dans un évidement ( 40 ) délimité axialement par les deux pièces ( 12, 14 ) de raccordement.

2. Assemblage ( 10 ) de tuyaux suivant la revendication 1, dans lequel au moins une extrémité ( 32, 34 ) du tuyau ( 30 ) de calorifugeage est réalisée sous la forme d'un ajustement appuyé, notamment les deux extrémités ( 32, 34 ) étant réalisées sous la forme d'ajustements appuyés.

3. Assemblage ( 10 ) de tuyaux suivant l'une des revendications 1 ou 2, dans lequel l'écrou d'accouplement est empêché de se desserrer.

4. Assemblage ( 10 ) de tuyaux suivant la revendication 3, dans lequel l'écrou d'accouplement est bloqué par un contre-écrou.

5. Assemblage ( 10 ) de tuyaux suivant l'une des revendications précédentes, dans lequel dans l'une des deux surfaces ( 10 ) d'étanchéité, est prévue une rainure ( 26 ) annulaire dans laquelle est mise une étanchéité ayant du graphite.

6. Utilisation d'un assemblage ( 10 ) de tuyaux suivant l'une des revendications précédentes pour faire passer un fluide de température variable ou dont la température s'écarte, au moins pendant une courte durée, de la température de l'assemblage de tuyaux de plus de 100 K.
